# EUROPÄISCHE PATENTSCHRIFT

(11) **EP 3 663 181 B1**
(45) Veröffentlichungstag und Bekanntmachung des Hinweises auf die Patenterteilung: **02.06.2021**
(21) Anmeldenummer: 18210609.6
(22) Anmeldetag: 06.12.2018
(51) Int. Cl.: B62M 6/45

(54) **PEDELEC**
PEDELEC
VÉLO À ASSISTANCE ÉLECTRIQUE

(43) Veröffentlichungstag der Anmeldung: 10.06.2020
(73) Patentinhaber: Amprio GmbH, 41460 Neuss (DE)
(72) Erfinder: GREVEN, Dietmar, 41460 Neuss (DE); MISGELD, Berno J.E., 41460 Neuss (DE)
(74) Vertreter: terpatent Patentanwälte ter Smitten Eberlein-Van Hoof Rütten Daubert

(56) Entgegenhaltungen:
- WO-A1-2015/014519
- DE-T2- 69 931 625
- GB-A- 2 485 216
- JP-A- 2001 199 378
- US-A- 5 860 487

## Beschreibung

Die Erfindung bezieht sich auf ein Pedelec mit einer elektrischen Pedelec-Antriebseinheit mit einem Antriebsmotor zum unterstützenden Antrieb mindestens eines Laufrades des Pedelec.

Unter einem Pedelec wird vorliegend ein Fahrrad verstanden, das nicht notwendigerweise nur als Zweirad ausgebildet sein muss, das jedoch mit einer ausschließlich unterstützend arbeitenden elektrischen Antriebseinheit ausgestattet ist. Die Antriebseinheit kann beispielsweise als Nabenantrieb, als Kettenantrieb oder als Tretwellen-Antrieb ausgebildet sein. Das Pedelec weist ferner eine aufladbare Batterie zur Versorgung des Antriebsmotors mit elektrischer Antriebsenergie auf. Zur elektrischen Steuerung des Pedelec und insbesondere der Pedelec-Antriebseinheit weist das Pedelec eine Motorsteuerung auf, die die elektrische Antriebsenergie für den Antriebsmotor in Abhängigkeit von einer Unterstützungsfunktion steuert. Unter einer Unterstützungsfunktion ist eine starre, eine lineare oder eine nicht-lineare Funktion oder mathematische Operation zu verstehen, die das Verhältnis zwischen einer Führungsgröße und der unterstützenden Motorleistung definiert. Bei Tretwellen-Antriebsmotoren gibt die Unterstützungsfunktion die elektrische Antriebsleistung in der Regel in Abhängigkeit von dem momentanen Fahrer-Drehmoment als Führungsgröße an, das durch den Fahrer muskulär in die Tretwelle eingebracht wird.

Bei bekannten Pedelecs ist in der Motorsteuerung eine Standard-Unterstützungsfunktion eingerichtet, mit der die Motorsteuerung gemäß einer Standard-Unterstützungsfunktion in Abhängigkeit von dem Fahrer-Tret-Drehmoment als Führungsgröße eine entsprechende elektrische Antriebsenergie ermittelt und dem Antriebsmotor zuleitet. Die Standard-Unterstützungsfunktion kann gegebenenfalls über eine Bedieneinheit zwischen einer maximalen Unterstützung und einer minimalen Unterstützung graduell und schrittweise durch den Fahrer eingestellt werden.

DE 10 2012 107 195 A1 offenbart die Merkmale des Oberbegriffs des Anspruchs 1.

Aus DE 10 2012 107 195 A1 ist ein Pedelec mit einer Tempomat-Funktionalität bekannt, mit der die Pedelec-Geschwindigkeit konstant gehalten werden kann. Allerdings wird eine derartig starre Tempomat-Funktionalität vom Pedelec-Fahrer als unangenehm empfunden.

Aufgabe der Erfindung ist es von diesem Hintergrund, ein Pedelec mit einer angenehmen Tempomat-ähnlichen Funktion zu schaffen.

Diese Aufgabe wird erfindungsgemäß mit einem Pedelec mit den Merkmalen des Anspruchs 1 gelöst.

Gemäß der Erfindung weist das Pedelec eine elektrische Pedelec-Antriebseinheit mit einem Antriebsmotor zum Antrieb mindestens eines Laufrades des Pedelec auf. Die Antriebseinheit ist bevorzugt als Tretlager-Antriebseinheit ausgebildet, die das hintere Laufrad des Pedelec antreibt. Das Pedelec weist ferner eine wiederaufladbare Batterie zur Versorgung des Antriebsmotors mit elektrischer Antriebsenergie auf. Schließlich weist das Pedelec eine Pedelec-Steuerung mit einer Motorsteuerung auf, die die elektrische Antriebsenergie für den Antriebsmotor in Abhängigkeit von einer Führungsgröße und anhand einer Unterstützungsfunktion steuert. Ferner weist das Pedelec eine Bedieneinheit auf, die mit der Pedelec-Steuerung informell verbunden ist, so dass über die Bedieneinheit beispielsweise Einfluss auf die Skalierung bzw. den Unterstützungsgrad der Standard-Unterstützungsfunktion genommen werden kann. Die Bedieneinheit kann beispielsweise am Lenker des Pedelec angebracht sein. Erfindungsgemäß weist das Pedelec eine der Motorsteuerung zugeordnete Unterstützungsfunktions-Ermittlungseinrichtung zur Ermittlung der elektrischen Antriebsenergie in Abhängigkeit von der Führungsgröße und in Abhängigkeit von einem weiteren Kriterium auf.

Das zusätzliche Kriterium gemäß der Erfindung wird vorliegend durch einen Standardzonen-Speicher definiert, in dem eine obere und eine untere Zonengrenze für ein Zonenkriterium gespeichert ist. Durch die derart definierte Standardzone ist festgelegt, ob die Standard-Unterstützungsfunktion, die in einem Standard-Unterstützungsfunktions-Speicher gespeichert ist, zur Anwendung kommt, oder nicht. Die in dem Standardzonen-Speicher gespeicherte Standardzone zwischen den beiden Zonengrenzen definiert in gewisser Weise einen Wunschbereich für das Zonenkriterium. Das Zonenkriterium entspricht in bevorzugter Weise nicht der Führungsgröße. Das Zonenkriterium ist besonders bevorzugt die momentane Pedelec-Geschwindigkeit.

Erfindungsgemäß ist vorgesehen, dass die von der Unterstützungsfunktions- Ermittlungseinrichtung gewählte Unterstützungsfunktion unterhalb der unteren Zonengrenze eine höhere elektrische Antriebsenergie bewirkt, als dies gemäß der Standard-Unterstützungsfunktion für den betreffenden Wert des Zonenkriteriums der Fall gewesen wäre. Wenn das tatsächliche Zonenkriterium, also beispielsweise die Pedelec-Geschwindigkeit, oberhalb der oberen Zonengrenze liegt, bestimmt die Unterstützungsfunktion-Ermittlungseinrichtung eine geringere elektrische Antriebsenergie, als dies gemäß der Standard-Unterstützungsfunktion für den betreffenden Wert des Zonenkriteriums der Fall wäre. Auf diese Weise wird bei Zonenkriterium-Werten außerhalb der beiden Zonengrenzen darauf hingewirkt, dass das Pedelec wieder in den Bereich innerhalb der beiden Zonengrenzen gelangt, beispielsweise, dass die durch die beiden Zonengrenzen definierte Geschwindigkeits-Zone wieder erreicht wird. Hierdurch wird also im Falle der Festlegung der Geschwindigkeit als Zonenkriterium ein "sanfter" Tempomat realisiert, wobei als Soll-Geschwindigkeit ein Geschwindigkeitsband festgelegt ist.

Erfindungsgemäß ist vorgesehen, dass die untere Zonengrenze und/oder die obere Zonengrenze über die Bedieneinheit einstellbar ist. Besonders bevorzugt sind beide Zonengrenzen, beispielsweise über entsprechende Tasten der Bedieneinheit, einstellbar. Auf diese Weise kann sowohl das Niveau der Soll-Zone als auch die Weite der Soll-Zone durch den Fahrer individuell eingestellt werden.

Vorzugsweise weist das Pedelec einen Tretdrehmoment-Sensor auf, der ein Fahrer-Tretdrehmoment ermittelt, wobei die Führungsgröße für den Unterstützungsregler das Fahrer-Tretdrehmoment ist. Die Unterstützungsfunktion, die durch die Unterstützungsfunktions-Ermittlungseinrichtung ausgewählt und angewandt wird, ermittelt also die elektrische Antriebsenergie in Abhängigkeit von dem Fahrer-Tretdrehmoment als Führungsgröße.

Vorzugsweise weist das Pedelec einen Pedelec-Geschwindigkeits-Sensor auf, der die momentane Geschwindigkeit des Pedelec angibt. Der Pedelec-Geschwindigkeits-Sensor kann beispielsweise an einem Laufrad des Pedelec angeordnet sein, kann jedoch auch Teil der Pedelec-Antriebseinheit sein, wenn der gesamte Antriebsstrang konzeptionell geeignet ist, ein ausreichend genaues Pedelec-Geschwindigkeitssignal an der Antriebseinheit zur Verfügung zu stellen. Auf diese Weise kann der Motorsteuerung eine genaue und zeitnahe Geschwindigkeits-Information zur Verfügung gestellt werden, sodass das Zonenkriterium die Pedelec-Geschwindigkeit sein kann bzw. ist.

Besonders bevorzugt ist vorgesehen, dass die obere Zonengrenze unterhalb einer starren und unbedingten oberen Abregelungsgrenze einstellbar ist. Im Falle der Pedelec-Geschwindigkeit als Zonenkriterium kann die obere Zonengrenze also unterhalb der Abregelungsgrenze gewählt und eingestellt werden. Die obere Abregelungsgrenze ist bei einem Pedelec häufig aus rechtlicher Sicht zwingend erforderlich, und liegt beispielsweise bei 25, 40 oder 45 km/h.

Gemäß einer bevorzugten Ausgestaltung der Erfindung weist das Pedelec einen Tretwellen-Drehfrequenz-Sensor auf, der die Tretfrequenz der Tretwelle ermittelt. Als Zonenkriterium kann die Tretwellen-Drehfrequenz festgelegt sein. Hierdurch ist es möglich, die Tretfrequenz innerhalb einer gewünschten Trefrequenz-Standardzone zu halten bzw. diese durch die Eingriffe bei Tretfrequenzen außerhalb der eingestellten Standardzone wieder in die Standardzone zurückzuführen. Unter der Tretfrequenz wird vorliegend die Anzahl der vollen Umdrehungen pro Sekunde der die zwei Tretkurbeln haltenden Tretwelle verstanden.

Alternativ oder ergänzend kann bevorzugt vorgesehen sein, dass dem Pedelec ein Herzfrequenz-Detektor zugeordnet ist, der die Herzfrequenz des Pedelec-Fahrers ermittelt. Der Herzfrequenz-Detektor ist informell mit der Unterstützungsfunktions-Ermittlungsvorrichtung verbunden, so dass als Zonenkriterium auch die Herzfrequenz festgelegt sein kann. Auf diese Weise kann für die Herzfrequenz bzw. ihrem Kehrwert eine Standardzone festgelegt werden, wobei bei Überschreitung der oberen Zonengrenze die Unterstützungsfunktion für eine größere Unterstützung durch den Antriebsmotor sorgt, bei Unterschreitung jedoch für eine geringere Unterstützung durch den Antriebsmotor sorgt.

Im Folgenden wird ein Ausgangsbeispiel der Erfindung anhand der Figuren näher erläutert. Es zeigen:
Figur 1 eine schematische Darstellung eines Pedelec mit einer Bedieneinheit und einer elektrischen Pedelec-Antriebseinheit zum Antrieb des hinteren Laufrades,
Figur 2 eine detaillierte schematische Darstellung der Bedieneinheit und der Antriebseinheit der Figur 1, die eine Motorsteuerung und eine Unterstützungsfunktions-Ermittlungseinrichtung aufweist, und
Figur 3 eine grafische Darstellung des Zusammenhangs der Pedelec-Geschwindigkeit und der in der Unterstützungsfunktions-Ermittlungseinrichtung hinterlegten Unterstützungsfunktion.

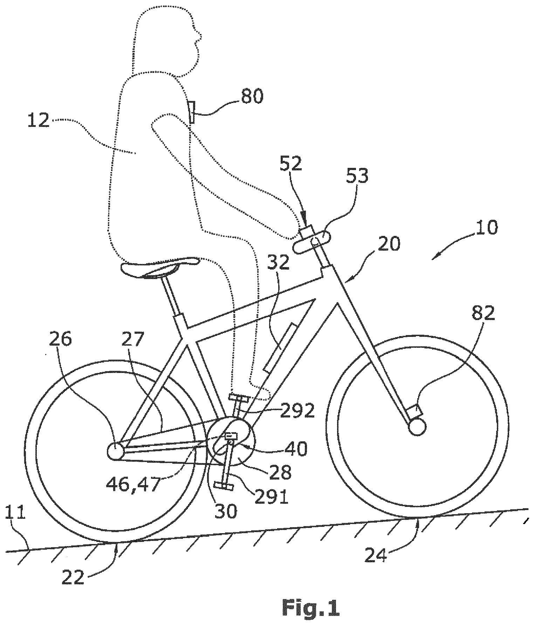

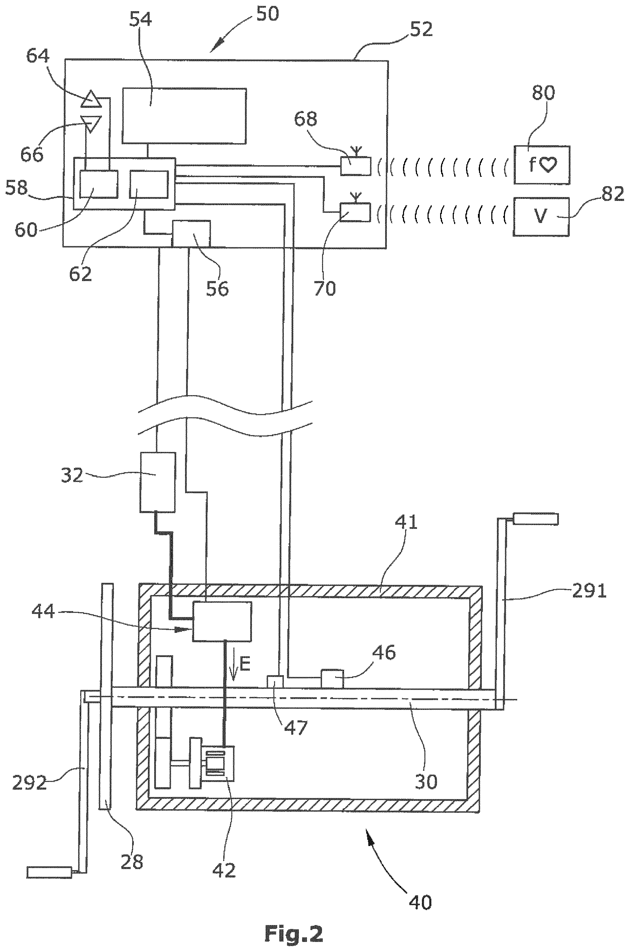

In der Figur 1 ist schematisch ein Pedelec 10 dargestellt, das von einem Fahrer 12 gefahren wird. Das Pedelec 10 weist einen Pedelec-Rahmen 20 auf, der ein hinteres Laufrad 22 und ein vorderes Laufrad 24 hält. Die beiden Laufräder 22,24 stehen auf einer Aufstandsfläche 11 auf. An einem Lenker 53, über den das vordere Laufrad 24 gelenkt werden kann, ist eine Bedieneinheit 52 befestigt, die In der Figur 2 näher dargestellt ist.

Der Pedelec-Rahmen 20 weist eine Tretlager-Antriebseinheit 40 auf, die eine Tretwelle 30 lagert, die an ihren beiden Längsenden jeweils eine Tretkurbel 291,292 aufweist, an deren freien Enden jeweils ein Pedal drehbar angebracht ist. Die Antriebseinheit 40 weist ein Abtriebs-Zahnrad 28 auf, von dem über eine Antriebskette 27 die mechanische Antriebsleistung auf ein Hinterrad-Ritzel 26 übertragen wird. Der Pedelec-Rahmen 20 hält ferner eine aufladbare Batterie 32, die die Antriebseinheit 40 bzw. den Antriebsmotor 42 innerhalb der Antriebseinheit 40 sowie die Bedieneinheit 52 elektrisch versorgt.

Die Antriebseinheit 40 weist ein im Wesentlichen geschlossenes Antriebseinheits-Gehäuse 41 auf, in dem die Tretwelle 30 drehbar gelagert ist, der Antriebsmotor 42, der die Tretwelle 30 antreibt, angeordnet ist und eine Leistungselektronik 44 angeordnet ist, durch die in Abhängigkeit entsprechender Steuersignale die elektrische Antriebsenergie E für den Antriebsmotor 42 zur Verfügung gestellt wird. Die Antriebseinheit 40 weist einen Tretwellen-Drehfrequenz-Sensor 46 auf, der die Tretfrequenz fWelle bzw. die Drehfrequenz der Tretwelle 30 ermittelt, und weist einen Tretdrehmoment-Sensor 47 auf, der das durch den Fahrer 12 in die Tretwelle 30 eingeleitete Fahrer-Drehmoment M ermittelt.

Am vorderen Laufrad 24 ist ein Pedelec-Geschwindigkeits-Sensor 82 angeordnet, der die momentane Pedelec-Geschwindigkeit V angibt und beispielsweise drahtlos übermittelt.

Es ist vorliegend ferner ein Herzfrequenz-Detektor 80 vorgesehen, der von dem Fahrer 12 getragen wird, und der drahtlos die Herzfrequenz des Pedelec-Fahrers 12 überträgt. Der Herzfrequenz-Detektor 80 kann jedoch auch Pedelec-seitig vorgesehen sein, beispielsweise durch eine entsprechende Sensorik in Griffen des Lenkers 53.

In der Figur 2 ist schematisch die Bedieneinheit 52 dargestellt, die eine komplexe Pedelec-Steuerung 50 aufweist. Die Pedelec-Steuerung weist eine Motorsteuerung 56 auf, deren Ausgangssignale die Antriebsmotor-Leistungselektronik 44 unmittelbar ansteuern. Die Pedelec-Steuerung 50 weist ferner zwei Taster 64,66 und eine Unterstützungsfunktion-Ermittlungseinrichtung 58 auf, die wiederum einen Standard-Unterstützungsfunktions-Speicher 60 und einen Standardzonen-Speicher 62 aufweist. In dem Standard-Unterstützungsfunktions-Speicher 60 ist eine Standard-Unterstützungsfunktion US gespeichert, dergemäß die elektrische Antriebsenergie E in Abhängigkeit von einer Führungsgröße bestimmt wird. Im vorliegenden Ausführungsbeispiel ist die Führungsgröße die Pedelec-Geschwindigkeit V, die von dem Geschwindigkeits-Sensor 82 drahtlos an einen Geschwindigkeitssignal-Empfänger 70 gesendet wird, der ebenfalls Bestandteil der Pedelec-Steuerung 50 ist. Die Pedelec-Steuerung 50 weist ferner einen Herzfrequenz-Empfänger 68 auf, der drahtlos das Herzfrequenz-Signal des Herzfrequenz-Detektors 80 empfängt. Die Bedieneinheit 52 weist ferner eine Anzeige 54 zur Visualisierung von Messwerten und eingestellter bzw. gewählter Funktionen auf.

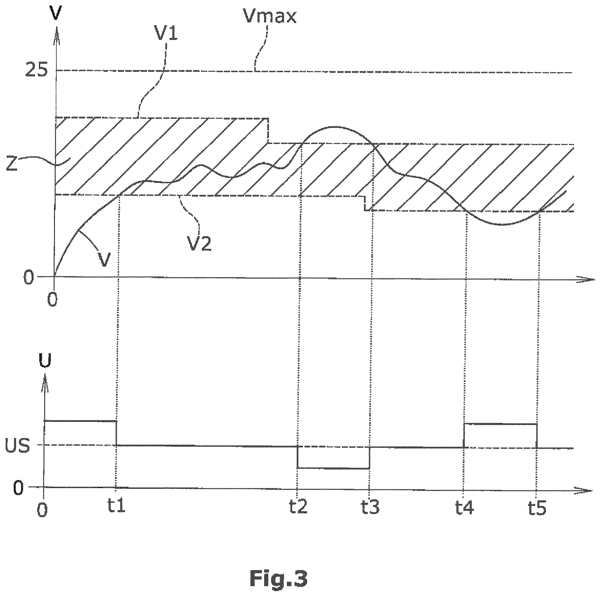

In der Figur 3 ist der Zusammenhang zwischen der Pedelec-Geschwindigkeit V als Führungsgröße, einer Pedelec-Geschwindigkeits-Standardzone Z und der Unterstützungsfunktion U grafisch dargestellt. Über die Bedieneinheit 52 kann eine Standardzonen-Funktion ein- und ausgeschaltet und das Zonenkriterium zwischen der Pedelec-Geschwindigkeit V, der Herzfrequenz fHerz und der Tretfrequenz fWelle gewählt werden. Bei eingeschalteter Standardzonen-Funktion und der Auswahl der Pedelec-Geschwindigkeit V als Zonenkriterium arbeitet die Pedelec-Steuerung 50 wie folgt:
In dem Standard-Unterstützungsfunktions-Speicher 60 ist eine Standard-Unterstützungsfunktion US gespeichert, die grundsätzlich über den gesamten möglichen unterstützten Geschwindigkeitsbereich wirksam ist, der sich von 0 km/h bis Vmax von beispielsweise 25 km/h erstreckt, wenn die Standardzonen-Funktion abgeschaltet ist. Der Unterstützungsgrad der Standard-Unterstützungsfunktion US kann gegebenenfalls in mehreren Stufen über die Tasten 64,66 eingestellt und gewählt werden. Die Standard-Unterstützungsfunktion US ermittelt in Abhängigkeit von dem Fahrer-Drehmoment M als Führungsgröße anhand einer Funktion oder einer Tabelle die elektrische Antriebsleistung E, die von der Leistungselektronik 44 in den Antriebsmotor 44 eingeprägt wird.

Bei eingeschalteter Standardzonen-Funktion kann über die Tasten 64,66 die Höhe der oberen Zonengrenze V1 und der unteren Zonengrenze V2 eingestellt werden, die die Standardzone Z begrenzen und definieren.

Solange die Pedelec-Geschwindigkeit V innerhalb der Standardzone Z liegt, wird die elektrische Antriebsenergie E anhand der Standard-Unterstützungsfunktion US bestimmt. Wenn das Zonenkriterium, also im vorliegenden Ausführungsbeispiel die Pedelec-Geschwindigkeit V, unterhalb der unteren Zonengrenze V2 liegt, wird durch die Unterstützungsfunktions-Ermittlungseinrichtung 58 eine höhere elektrische Antriebsenergie E ermittelt und ausgegeben, als gemäß der Standard-Unterstützungsfunktion US für diese Pedelec-Geschwindigkeit V vorgesehen gewesen wäre. Diese Situation ist in der Figur 3 in den ZeitIntervallen 0 bis t1 und t4 bis t5 dargestellt. In diesen beiden ZeitIntervallen ist also die Unterstützungsfunktion U erhöht gegenüber der Unterstützungsfunktion US in den Intervallen t1 bis t2 und t3 bis t4, in denen die Pedelec-Geschwindigkeit V innerhalb der Standardzone Z liegt.

In dem Zeitintervall t2 bis t3 liegt die Pedelec-Geschwindigkeit V über der oberen Zonengrenze V1, so dass die Unterstützungsfunktions-Ermittlungseinrichtung 58 eine Unterstützungsfunktion U wählt, die eine geringere elektrische Antriebsenergie E ergibt als gemäß der Standard-Unterstützungsfunktion US vorgesehen gewesen wäre.

Der Fahrer 12 wird also dabei unterstützt, die Pedelec-Geschwindigkeit V innerhalb der Standardzone Z zu halten, jedoch wird dies nicht erzwungen. Auf diese Weise ist eine komfortable und auf angenehme Weise unscharfe quasi-Tempomatfunktion für das Pedelec 10 realisiert.

Alternativ zu der Pedelec-Geschwindigkeit V als Zonenkriterium kann die Herzfrequenz fHerz oder die Tretfrequenz fWelle als Zonenkriterium gewählt werden.

## Patentansprüche

1. Pedelec (10) mit einer elektrischen Pedelec-Antriebseinheit (40) mit einem Antriebsmotor (42) zum Antrieb mindestens eines Laufrades (22) des Pedelec (10), mit
einer Batterie (32) zur Versorgung des Antriebsmotors (44) mit elektrischer Antriebsenergie (E),
einer Pedelec-Steuerung (50) mit einer Motorsteuerung (56), die die elektrische Antriebsenergie (E) für den Antriebsmotor (44) in Abhängigkeit von einer Führungsgröße mit einer Unterstützungsfunktion (U) steuert, und
einer Bedieneinheit (52), die mit der Pedelec-Steuerung (50) informell verbunden ist,
wobei der Motorsteuerung (56) eine Unterstützungsfunktions-Ermittlungseinrichtung (58) zur Bestimmung der elektrischen Antriebsenergie (E) in Abhängigkeit von der Führungsgröße zugeordnet ist,
wobei die Unterstützungsfunktion-Ermittlungseinrichtung (58) einen Standard-Unterstützungsfunktions-Speicher (60), in dem die Standard-Unterstützungsfunktion (US) gespeichert ist,
**dadurch gekennzeichnet dass** die Unterstützungsfunktion-Ermittlungseinrichtung auch einen Standardzonen-Speicher (62) aufweist, in dem eine obere und eine untere Zonengrenze (V1,V2) eines Zonenkriteriums (V;fHerz;fWelle) für die Gültigkeit der Standard-Unterstützungsfunktion (US) gespeichert sind,
wobei die von der Unterstützungsfunktions-Ermittlungseinrichtung (58) gewählte Unterstützungsfunktion (U) unterhalb der unteren Zonengrenze (V2) eine höhere elektrische Antriebsenergie (E) als gemäß der Standard-Unterstützungsfunktion (US) vorgesehen wäre, und oberhalb der oberen Zonengrenze (V1) eine geringere elektrische Antriebsenergie (E) als gemäß der Standard-Unterstützungsfunktion (US) vorgesehen wäre, ergibt,
wobei die untere Zonengrenze (V2) und/oder die obere Zonengrenze (V1) über die Bedieneinheit (52) einstellbar ist.

2. Pedelec (10) nach Anspruch 1, wobei das Pedelec (10) einen Pedelec-Geschwindigkeits-Sensor (82) aufweist, der die momentane Geschwindigkeit (V) des Pedelec (10) angibt, und das Zonenkriterium (V) die Pedelec-Geschwindigkeit ist.

3. Pedelec (10) nach Anspruch 2, wobei die obere Zonengrenze (V1) unterhalb einer starren unbedingten oberen Abregelungsgrenze (Vmax) einstellbar ist.

4. Pedelec (10) nach Anspruch 1, wobei ein Tretwellen-Drehfrequenz-Sensor (46) vorgesehen ist, der die Tretfrequenz (fWelle) einer Tretwelle (30) ermittelt, wobei das Zonenkriterium die Tretwellen-Drehfrequenz (fWelle) ist.

5. Pedelec (10) nach Anspruch 1, wobei ein Herzfrequenz-Detektor (80) vorgesehen ist, der die Herzfrequenz (fHerz) eines Pedelec-Fahrers (12) ermittelt, wobei die das Zonenkriterium die Fahrer-Herzfrequenz (fHerz) ist.

6. Pedelec (10) nach einem der vorangegangenen Ansprüche, wobei das Pedelec (10) einen Tretdrehmoment-Sensor (47) aufweist, der ein Fahrer-Drehmoment (M) ermittelt, und die Führungsgröße das Fahrer-Drehmoment (M) ist.

## Claims

1. Pedelec (10) comprising an electric pedelec drive unit (40) with a drive motor (42) for driving at least one running wheel (22) of the pedelec (10), comprising
a battery (32) for supplying the drive motor (44) with electrical drive energy (E),
a pedelec control (50) comprising a motor control (56) that controls the electrical drive energy (E) for the drive motor (44) in dependence on a reference variable with a support function (U), and
an operating unit (52) to which the pedelec controller (50) is informally connected,
the motor controller (56) having assigned thereto an assistance function determining device (58) for determining the electrical drive energy (E) in dependence on the reference variable,
the assistance function determining device (58) comprising a standard support function memory (60) in which the standard support function (US) is stored,
**characterized in that** the assistance function determining device also comprises a standard zone memory (62) in which an upper and a lower zone limit (V1, V2) of a zone criterion (V; fHerz; fshaft) for the validity of the standard support function (US) are stored,
wherein the support function (U) selected by the support function determining device (58), below the lower zone limit (V2), results in a higher electrical drive energy (E) than would be provided according to the standard support function (US), and, above the upper zone limit (V1), results in a lower electrical drive energy (E) than would be provided according to the standard support function (US),
wherein the lower zone limit (V2) and/or the upper zone limit (V1) are adjustable through the control unit (52).

2. Pedelec (10) according to claim 1, wherein the pedelec (10) comprises a pedelec speed sensor (82) that indicates the current speed (V) of the pedelec (10), and the zone criterion (V) is the pedelec speed.

3. Pedelec (10) according to claim 2, wherein the upper zone limit (V1) can be set below a rigid, unconditional upper cut-off limit (Vmax).

4. Pedelec (10) according to claim 1, wherein a pedaling shaft rotational frequency sensor (46) is provided that determines the pedaling frequency (fshaft) of a pedaling shaft (30), the zone criterion being the pedaling shaft rotational frequency (fshaft).

5. Pedelec (10) according to claim 1, wherein a heart rate detector (80) is provided that determines the heart rate (fHerz) of a pedelec driver (12), the zone criterion being the driver's heart rate (fHerz).

6. Pedelec (10) according to one of the preceding claims, wherein the pedelec (10) comprises a pedaling torque sensor (47) that determines a driver's torque (M), and the reference variable is the driver's torque (M).

## Revendications

1. Pedelec (10) comportant une unité d'entrainement électrique (40) avec un moteur d'entrainement (42) pour l'entrainement d'au moins une roue de roulement (22) du pedelec (10), comportant
une pile (32) pour l'alimentation du moteur d'entrainement (44) en énergie d'entrainement électrique (E),
une commande de pedelec (50) comprenant une commande de moteur (56) commandant l'énergie d'entrainement électrique (E) pour le moteur d'entrainement (44) en fonction d'une variable de référence avec une fonction d'assistance (U), et
une unité de commande (52) connectée de manière informelle à la commande de pedelec (50),
la commande de moteur (56) étant associée à un dispositif de détermination de fonction d'assistance (58) pour déterminer l'énergie d'entrainement électrique (E) en fonction de la variable de référence,
le dispositif de détermination de fonction d'assistance (58) comportant une mémoire de fonctions d'assistance standard (60) dans laquelle la fonction d'assistance standard (US) est stocké,
**caractérisé en ce que** le dispositif de détermination de fonction d'assistance comprend également une mémoire de zone standard (62) dans laquelle une limite de zone supérieure et inférieure (V1, V2) d'un critère de zone (V; fHerz; farbre) pour la validité de la fonction d'assistance standard (US) sont stockées,
la fonction d'assistance (U) choisie par le dispositif de détermination de fonction d'assistance (58) se traduit, inférieure à la limite de la zone inférieure (V2), par une énergie d'entrainement électrique plus élevée (E) que celui qui serait fourni selon la fonction d'assistance standard (US), et, au-dessus de la limite de la zone supérieure (V1), par une énergie électrique d'entrainement inférieur (E) à celui qui serait fourni selon la fonction d'assistance standard (US),
la limite de la zone inférieure (V2) et/ou la limite de la zone supérieure (V1) étant ajustable par l'unité de commande (52).

2. Pedelec (10) selon la revendication 1, dans lequel le pedelec (10) comprend un capteur de vitesse de pedelec (82) indiquant la vitesse actuelle (V) du pedelec (10), et le critère de zone (V) est la vitesse du pedelec.

3. Pedelec (10) selon la revendication 2, dans lequel la limite de zone supérieure (V1) étant réglable en dessous d'une limite de coupure supérieure rigide et inconditionnelle (Vmax).

4. Pedelec (10) selon la revendication 1, dans lequel un capteur de fréquence de rotation d'arbre de pédalage (46) est prévu qui détermine la fréquence de pédalage (farbre) d'un arbre de pédalage (30), le critère de zone étant la fréquence de rotation d'arbre de pédalage (farbre).

5. Pedelec (10) selon la revendication 1, dans lequel un détecteur de fréquence cardiaque (80) est prévu qui détermine la fréquence cardiaque (fHerz) d'un conducteur de pedelec (12), le critère de zone étant la fréquence cardiaque du conducteur (fHerz).

6. Pedelec (10) selon l'une quelconque des revendications précédentes, dans lequel le pedelec (10) présente un capteur de couple de pédalage (47) qui détermine le couple du conducteur (M), et la variable de référence est le couple du conducteur (M).
